Europäisches Patentamt

European Patent Office

Office européen des brevets

(19)

(11) **EP 0 470 556 B1**

(12) **EUROPEAN PATENT SPECIFICATION**

(45) Date of publication and mention
of the grant of the patent:
**21.05.1997 Bulletin 1997/21**

(51) Int Cl.⁶: **H02P 7/00**, H02P 6/08

(21) Application number: **91113141.5**

(22) Date of filing: **05.08.1991**

(54) **Motor control apparatus and method**

Gerät und Verfahren zur Steuerung eines Motors

Méthode et appareil de commande d'un moteur

(84) Designated Contracting States:
**DE FR GB IT**

(30) Priority: **06.08.1990 US 563368**

(43) Date of publication of application:
**12.02.1992 Bulletin 1992/07**

(73) Proprietor: **Vickers E.S.D., Inc.**
**Maumee, Ohio 43537-0050 (US)**

(72) Inventors:
• **Morser, A. Harold**
**Cincinnati, Ohio 45243 (US)**
• **Minnich, Thomas**
**Franklin, Ohio 45005 (US)**
• **Myers, Stanley L.**
**Ohio (US)**
• **Walsh, Stephen T.**
**Cincinnati, Ohio 45241 (US)**

(74) Representative: **Lally, William et al**
**FORRESTER & BOEHMERT**
**Franz-Joseph-Strasse 38**
**80801 München (DE)**

(56) References cited:
**EP-A- 0 126 778**          **EP-A- 0 126 778**
**EP-A- 0 203 550**          **EP-A- 0 264 728**
**EP-A- 0 264 728**          **EP-A- 0 401 818**

• **Conference record of the 1987 IEEE Industry**
**Applications Society Annual meeting, Atlanta,**
**October 1987, P.Pillay & al.: "Application**
**characteristics of permanent magnet**
**synchronous and brushless DC motors for servo**
**drives"**

## Description

This invention relates generally to controls for motors. In particular, this invention relates to a method, respectively a control for brushless DC motors as defined in the preamble of claim 1, respectively claim 10.

Brushless DC motors of the type of interest herein are constructed to have a plurality of field coils arranged in a stator and a rotor rotatable relative thereto having a plurality of permanent magnetic pole pieces arranged therein. Such motors permit control of velocity over a wide range as is inherent with DC motors and eliminate the inherent disadvantages of brush wear and attendant loss of motor performance. "Commutation" of current in motors of this type occurs in the field coils and is accomplished by electronically controlled switches. The commutation of current in the field coils necessitates the detection of rotor position to identify the coils to which energy is to be applied to produce the desired torque.

It is known to control brushless DC motors with primarily analogue devices providing the desired compensation of the motor and control responses to effect a desired motor performance. In such known controls, commutation may be effected at the switching stage by direct application of the output of the rotor position transducer. To this end it is common to use a Hall effect transducer mounted to the motor rotor to determine rotor relative position and control the field coil current switches. In such control systems measurement of motor angular velocity, required for control of torque, is typically accomplished by a conventional tachogenerator. When it is desired to measure position of a machine element driven by the motor, further position transducers are used.

The known analogue controls for brushless DC motors suffer the disadvantage of requiring manual adjustment at the control device of variable parameters and lack programmable adaptability for large variations in motor sizes, loads and speeds. Further, the use of the various dedicated transducers described above in conjunction with such known control systems increases the cost of such systems, while adding to the complexity thereof, thereby reducing overall reliability.

There is known from EP-A-126 778 a control for a permanent magnet synchronous motor wherein continuous rotor position measurement is used for generation of motor current sinusoids and in which microprocessors are used to effect velocity and current control wherein velocity loop computations are periodically performed to produce current commands and current loop computations are periodically performed to produce command values for application to a modulator/inverter and amplifier circuit (DA converter), the period of velocity loop computations being greater than the period of current loop computations.

There is known from EP-A-264 728 a control for a brushless DC motor wherein rotor position is detected at predetermined locations required for current commutation and in which a microcomputer performs speed control, the rotor position detection circuit being used to control switching of the currents of the armature windings, the speed control determining current magnitudes for control of a pulse-width modulated inverter.

In accordance with one aspect of this invention a method for controlling a brushless DC motor is characterised by the features, that

a) the position of the rotor relative to the stator is periodically measured at a loop closure rate defining a predetermined time interval;
b) the current command signals are produced at the loop closure rate;
c) the commutation pattern control signals are periodically produced at said loop closure rate and include a commutation anticipation signal representing the instant of commutation from one pattern of conduction to another within the said predetermined time interval.

In accordance with another aspect of this invention there is provided an apparatus for controlling a brushless DC motor, characterised in that

(a) the position transducer is operative to measure the angular position of the rotor at a loop closure rate defining a pre-determined timed interval;
b) the current command signals are produced at the loop closure rate;
c) the commutation pattern control signals are periodically produced at said loop closure rate and include a commutation anticipation signal representing the instant during the predetermined interval when change from one pattern to another is to occur; and
d) the signal processing means includes logic means for periodically producing control signals for controlling application of current to the motor in response to the commutation pattern control signals and pulse width control signals generated from comparison of measured motor current and the current command signals.

Further objects and advantages of the present invention shall become apparent from the accompanying drawings and the following description thereof.

Fig. 1 is an overall functional block diagram of a machine control and the motor control of the present invention.

Fig. 2 is a block diagram of a machine control with which the motor control of the present invention may advantageously be used.

Fig. 3 is a block diagram of the digital signal processing module of the motor control of Fig. 1.

Fig. 4 is a block diagram of the motor and position transducer interface module of the motor control of Fig. 1.

Figs. 5a and 5b are flow charts illustrating the cycle of operation of a first signal processor of the module of Fig. 3.

Figs. 6a and 6b are flow charts illustrating the cycle of operation of a second signal processor of the module of Fig. 3.

Fig. 7 is a circuit diagram of the switching transistor connections of the power block module of Fig. 1.

Fig. 8 is a flow chart representing the sequence of functions performed by the interface module of Fig. 4.

Fig. 9 is a circuit diagram of an analogue current loop processing module included in the interface module of Fig. 4.

To illustrate the invention, a motor control developed by Cincinnati Milacron Inc., the assignee of the present invention, shall be described in detail. While this motor control represents a preferred embodiment of the invention, the description thereof is not intended to be in any way limiting in respect of the scope of the invention which is defined by the appended claims and all equivalents thereof.

The motor control of the present invention is particularly advantageously adapted to control brushless DC motors used as actuators for effecting motion of machine moveable members. In such applications, desired motor performance may vary with the task being performed thereby making it desirable to be able to adapt motor performance to changing requirements.

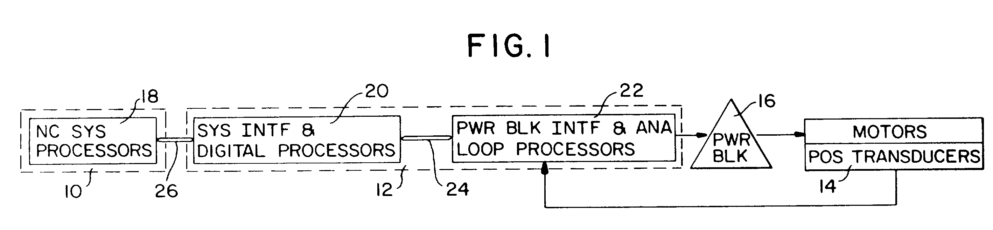

Referring to Figure 1, a numerical control system 10 is connected to a motor control system 12 which provides an interface between the numerical control 10 and the motors and position transducers 14. The motor control system operates typically at low level signals and power for the motors is derived typically from a multiphase alternating current power source which is rectified and applied through switching devices located at a power block module 16. The switching devices, typically transistors, are controlled by pulse-width modulation signals to achieve a desired instantaneous motor current and hence a desired instantaneous torque.

The present invention provides for data exchange between the numerical control system processors 18 and a digital signal processing module 20 of the motor control 12. The digital signal processing module receives data defining values for parameters used to control the motors and receives position command data from the NC system processors 18. The digital signal processing module 20 converts the position command data and the control parameter data to servo mechanism loop specific data which is transferred to the power block and transducer interface module 22. Position data from motor position transducers as well as from machine member position transducers is generated by the interface module 22 which provides the excitation signals for the transducers and detects the positions measured by the transducers from their output signals. In addition, interface module 22 provides the pulse-width modulation control signals for the power transistors of power block 16.

In addition to position data, the interface module 22 produces digital representations of the commanded motor current, actual motor current, and the difference therebetween, designated as current error. This data is available from the interface module 22 for access by the digital signal processing module 20. The signal processing module makes the data derived from interface module 22 available to the numerical control system processors 18.

It will be understood by those skilled in the art that the numerical control 10 periodically produces position command data for each of the movable machine members. The motion of these machine members is effected by motors controlled by motor control 12. The rate at which the position command data changes is dependent upon the rate of motion of the machine members. However, the rate at which new position command data is produced may be constant, defining a position command data update interval. In contrast to the update interval, the rate of commutation of current among the motor stator windings is dependent upon the construction of the motor being controlled and the rate of rotation of the motor rotor relative to the motor stator. Therefore, motor control 12 must accommodate the fixed update interval of the numerical control 10 and the variable interval of commutation dictated by the commanded motor velocities.

NUMERICAL CONTROL

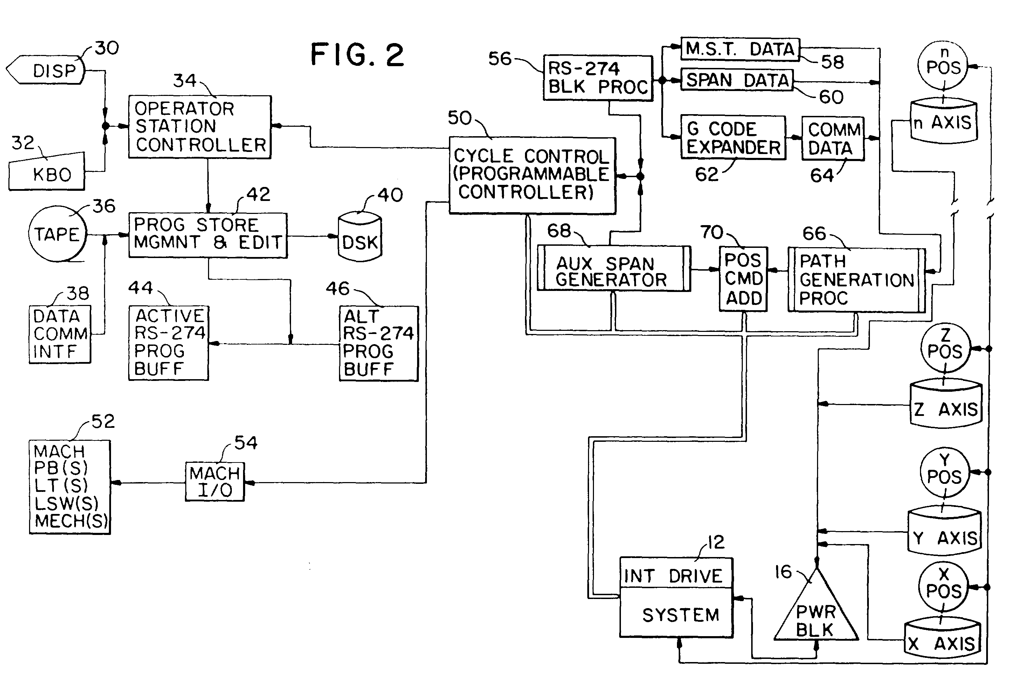

Additional details of the numerical control 10 of Figure 1 shall be described with reference to the block diagram of Figure 2. The numerical control includes: an operator or user interface; machine mechanism interface and control; program storage and edit facilities; machine cycle control; and work piece program processing and path generation control.

The operator interface includes a display device 30 such as a CRT or other alphanumeric display device, a manual data entry device such as keyboard 32 and an operator station controller 34. The operator station controller receives data to be displayed from the NC system processors 18 and formats the data for the display device 30. Manual data entries from the keyboard 32 are encoded by operator station controller 34 for distribution to other numerical control system elements. Operator station controller 34 enables manual data input in accordance with the active mode of operation of the machine as determined by the cycle control.

In addition to manual data input, workpiece programs may be entered into local storage of the control by means of bulk data transfer devices such as, for example a tape reader 36 or a data communication interface 38. Bulk storage of workpiece programs is provided on disk store 40. A program storage and edit controller 42 manages the communication of data from the input devices 36 and 38 to and from the bulk store 40 as well as to and from the operator station controller 34. Two workpiece program buffers 44 and 46 are provided for active and alternative workpiece programs. Program instructions are transferred for execution from the active buffer 44. The alternative buffer 46 provides storage for a program which may be edited while execution of a program goes forward.

The over all cycle of operation of the numerical control 10 is controlled by the cycle control 50. Cycle control 50 operates as a conventional programmable controller to execute control programs relating machine push buttons, lights, limit switches and mechanisms such as transmissions, tool changers, workpiece transfer devices and so forth and the cycle of operation of the controlled machine. The machine elements are indicated generally by block 52 and are monitored and controlled through a machine input-output interface 54. In control of the cycle of operation of the machine, cycle control 50 effects transfer of workpiece program instructions from the active buffer 44 to a block processor 56. Further, cycle control 50 monitors the machine status and effects the appropriate response to error conditions.

Workpiece programs consist of blocks of instructions containing coordinate data, feed rate data, tool data, spindle speed data, miscellaneous function data and cycle control codes. The block processor 56 decodes each block of instructions and distributes the data as appropriate for control of machine functioning. Miscellaneous function, spindle speed and tool data associated with machine functions such as tool selection, transmission speed changes and mechanism control are placed in the data store 58. Coordinate data specifying end points for the machine member axes of motion are placed in the data store 60. Code expander 62 operates on cycle control codes to effect selection of commissioning data from the commissioning data store 64 and to select the desired mode of path generation.

Path generation processor 66 produces coordinate axis position commands for each update interval in accordance with the machine operations specified by the active workpiece program instructions. The position commands produced by path generation processor 66 reflect the rate of change of position of all machine axes as defined by the programmed coordinates, feed rates, and cycle commands. In addition to the path generation processor 66, coordinate axis position commands may be generated by an auxiliary span generator 68. Auxiliary span generator 68 produces motion commands in association with machine activity according to specifications of the particular machine and the desires of the machine builder. For example, the auxiliary span generator may generate motion commands to effect movement to predetermined locations desired to effect tool or workhead changes or in response to operator input. While it is not customary that commands derived from workpiece program data are executed simultaneously with commands generated by the auxiliary span generator, the design of the control accommodates such simultaneous execution by providing for summation of the commands at the position command summer 70. The result of this summation is then output to the motor control 12.

In applicants' preferred embodiment communication between the motor control 12 and NC systems processors 18 is accomplished over a data bus conforming to the IEEE 796-88 signal specification for the P1 connector. Data entered under control of the operation station controller 34 or from the workpiece program as well as data from commissioning data store 64 are all available over the data bus 26 to the motor controller 12.

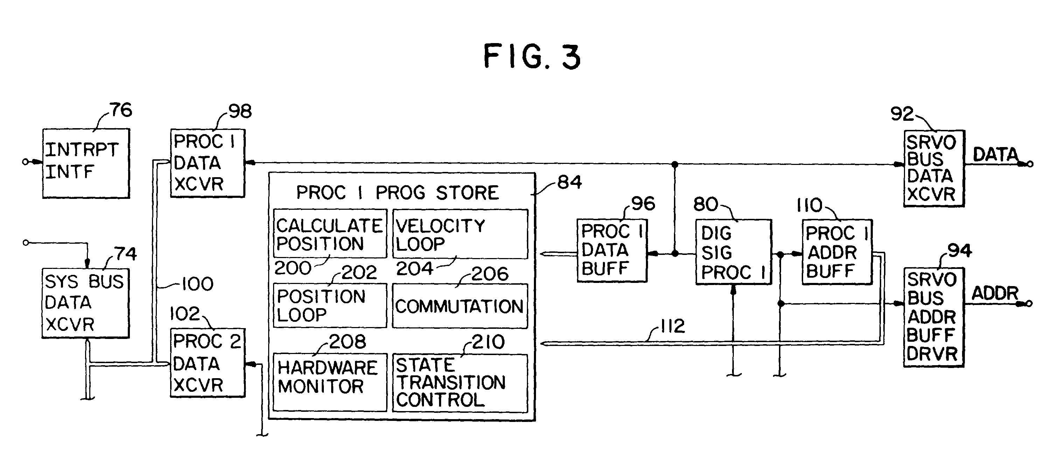

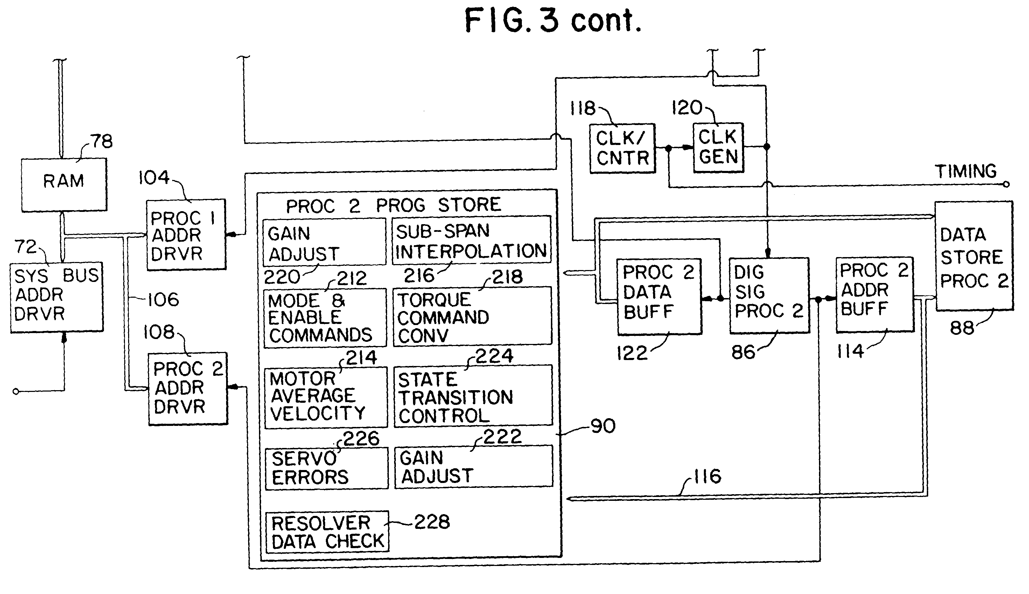

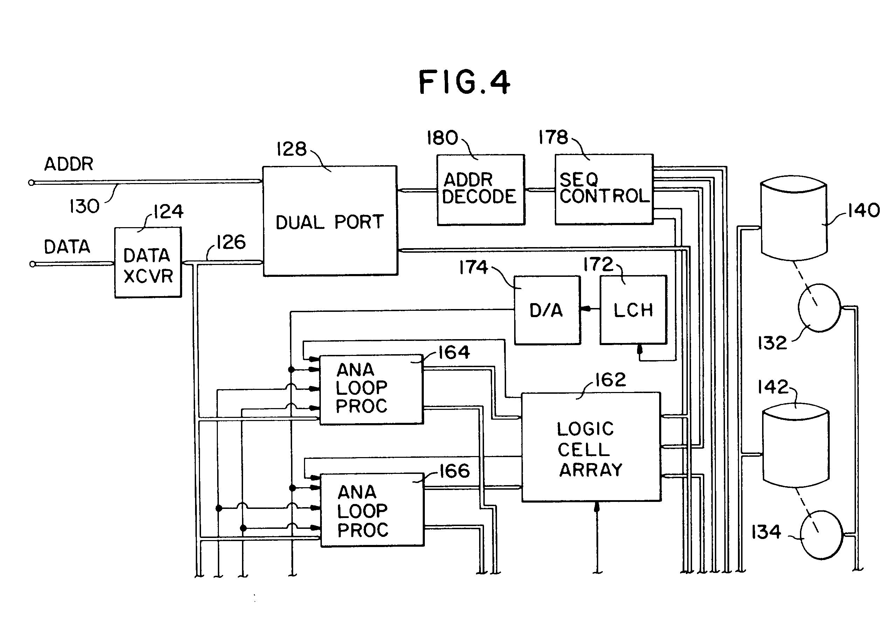

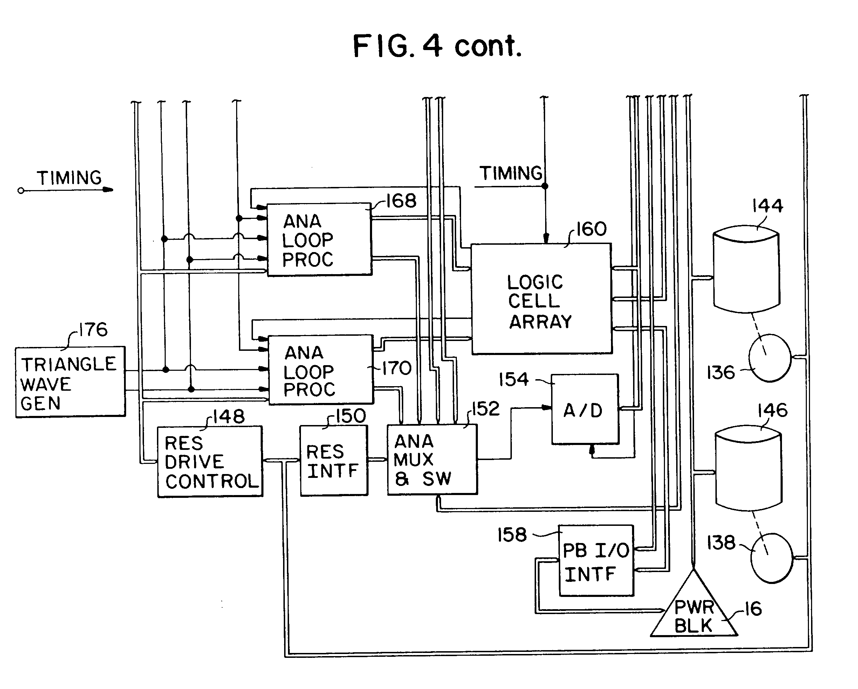

A detailed description of the motor controller 12 will be given with reference to the block diagrams of Figures 3 and 4. The digital signal processing module 20 is shown in detail in the block diagram of Figure 3. This module receives the position command data from the numerical control 10 at the update interval, retrieves position transducer output signal data from the interface module 22 and periodically produces current commands and commutation pattern control signals in response thereto. In addition to velocity control effected by the position loop implemented by signal processing module 20, velocity commands may be entered directly from numerical control 10 to provide velocity feed forward or for control in velocity only fashion rather than derivative as in position loop control. The current command signals are produced by a digitally implemented velocity control loop and the commutation pattern control signals are derived from the time sampled measured rotor relative position and average actual rotor relative velocity. Additionally, a torque command may be entered directly from the numerical control 10 to effect torque feed forward as may be done to counterbalance known loads presented to the motors.

SIGNAL PROCESSING MODULE

As noted above, data is exchanged between the NC system processors 18 and the digital signal processing module 20 over a system data bus 26. Data is exchanged between the digital signal processing module 20 and the interface module 22 via a dedicated motor controller bus 24 providing independent data and address lines.

Signal processing module 20 employs digital signal processors 80 and 86 to perform the calculations required to generate the current command signals and the commutation pattern control signals. Applicants have chosen the TMS 320C25 digital signal processors available from Texas Instruments Incorporated. Programs executed by signal processor 80 are stored in local memory 84 and include: position calculation routines 200; position loop calculation routines 202; velocity loop calculation routines 204; commutation control routines 206; hardware monitor routines 208; and, machine state transition control routines 210. Likewise signal processor 86 operates in conjunction with programs stored in memory 90 including: mode and enable command processing routines 212; motor average velocity calculation routines 214; sub-span interpolation routines 216; torque command conversion routines 218; position loop gain adjust calculation routines 220; velocity loop gain adjust calculation routines 222; machine state transition control routines 224; and, servo error processing routines 226.

The signal processors 80 and 86 include built-in address and data busses which are independently connected to the system busses as will be further described herein. The data bus 26 provides separate signal lines for address data exchanged through the system bus address driver 72. System bus data is exchanged through data transceiver 74. System data bus 26 provides additional signal lines for interrupt signals which are connected at the interrupt interface 76. Local memory to support the exchange of data over the bus is provided in a random access memory 78. Data associated with servo system bus 24 is exchanged through the data transceiver 92 and servo system bus addresses are exchanged through the address driver 94.

Continuing with reference to Fig. 3 and considering signal processor 80, address buffer 110 is interposed between the address bus of signal processor 80 and the immediate address bus 112 serving program store 84. In a like manner address driver 104 is interposed between the address bus of signal processor 80 and a local address bus 106 serving system bus address driver 72 and memory 78. A data bus buffer 96 is interposed between the data bus of signal processor 80 and program store 84. Data transceiver 98 is interposed between the signal processor 80 data bus and a local data bus 100 serving system bus data transceiver 74 and memory 78. The address and data busses of processor 80 are connected to, respectively, servo system address buffer 94 and servo system data transceiver 92. Functions performed by signal processor 80 are primarily directed to position and velocity loop control associated with generation of current command signals, hence the direct connection to the servo system bus through transceiver 92 and buffer 94.

Considering processor 86, address driver 108 is interposed between the address bus of signal processor 86 and the local address bus 106 serving the system address driver 72 and memory 78. Address buffer 114 is interposed between the address bus of signal processor 86 and the immediate address bus 116 connecting data store 88, which provides storage for variable data used by processor 86, and program store 90. Data buffer 122 is interposed between the data bus of signal processor 86 and the data channels of data store 88 and program store 90. Data transceiver 102 is interposed between the data bus of signal processor 86 and the local data bus 100 serving system data bus transceiver 74 and memory 78. Variable data used by processor 86 is stored in data store 88.

Continuing with reference to Fig. 3, an oscillator and counter 118 produce outputs which are decoded as clock signals by the clock generator 120. These clock signals control the rate of execution of programs by the processors 80 and 86 and define predetermined time intervals assumed in the calculation of current command signals and the sub-intervals of sub-span interpolation.

Signal processing module 20 performs the functions of: interpolating sub-spans of commanded positions within each update interval; calculating measured position from the transducer output data; calculating position error, i.e., the difference between sub-span position commands and measured or actual position; calculating a velocity command in response to position error; and, calculating a current command to control the motor velocity. The signal processing module 20 receives the input position command from the numerical control 10 in feedback units, i.e., the dimensionless units defining the resolution of measured positions. In the preferred embodiment, resolvers are used as position transducers and the rotor relative angular position $\theta$ is extracted from the resolver output sine and cosine amplitude data using known techniques. Actual position is expressed in the same dimension-less units as used to express the position commands. Digital processing module 20 converts the calculated position difference to a velocity command by multiplying the position error by a position loop gain factor KV. The expression is:

$$VCMD = KV (POS\ CMD - POS\ ACT)$$

Where:

VCMD is velocity command
POS CMD is commanded position
POS ACT is actual position

The value of the position loop gain factor KV may be supplied from the numerical control 10 from commissioning data store 64 at the time of system initialization. Thereafter, the loop gain factor KV may be adjusted by inputs received from the numerical control 10 by modification of an adjustment value KVADJ. Applicants provide adjustment of the factor KV in accordance with the following algorithm:

$$KVEFF = KVADJ*KV$$

Where:

KVEFF is the effective value of KV
KVADJ has a range of 0 - 4

The digital processing module 20 effects velocity control in response to a velocity error VE, i.e., the difference between the velocity command VCMD and the actual instantaneous velocity. In the preferred embodiment, the actual instantaneous velocity is calculated from the measured change of position in the immediately preceding loop closure interval. Velocity control may be effected by either a proportional plus integral control scheme or a pseudo derivative feedback control scheme. Both control techniques are implemented using a compensated value of measured velocity to produce a scaled and compensated actual velocity signal VACT. The value of VACT is calculated to implement velocity feedback compensation having the form:

$$KF[((z+1)(z-ZF1))/((z-PF2)(z-PF3))]$$

Where:

$z$ represents complex frequency in the discrete time domain according to $z = e^{s\delta t}$ in which s represents complex frequency in the continuous time domain and $\delta t$ represents the sample interval
KF = scale factor
PF2 = lead compensator zero frequency
PF3 = filter pole frequency
ZF1 = lead compensator pole frequency

Values of the lead compensator zero frequency PF2, the filter pole frequency PF3, and the lead compensator pole frequency ZF1 are supplied by the user and may be stored in commissioning data store 64 for transfer to the motor control 12 upon system initialization. Applicants have chosen to assign values of zero to ZF1 and PF2, thereby simplifying the expression and reducing processing time. A value for the feedback scale factor KF is calculated by signal processing module 20 at an assumed frequency of zero hertz to effect gain matching between the continuous and discrete time domains. The expression is:

$$KF = CF*(1-PF2)(1-PF3)/2*(1-ZF1)$$

Where:
CF = a constant effecting the relationship between feedback scaling and VACT scaling
With the simplifying choices of ZF1 and Pf2 assigned values of zero, this expression for KF at the matching frequency of zero hertz becomes:

$$KF = (1-PF3)/2$$

The calculations to implement the desired scaling and compensation of velocity feedback are:

$$VACT = V_k*KF + V_{k-1}*KF*(1-ZF1) + V_{k-2}*(-KF*ZF1)$$

$$+ VACT_{k-1}*(PF2+PF3) + VACT_{k-2}*(-PF2*PF3) \qquad (1)$$

Where:

$V_k$ = measured velocity of the k update interval
$V_{k-1}$ = measured velocity of the k-1 update interval

$V_{k-2}$ = measured velocity of the k-2 update interval
$VACT_{k-1}$ = VACT of the k-1 update interval
$VACT_{k-2}$ = VACT of the k-2 update interval

With the simplifying choices of KF1 and PF2 equal to zero, equation (1) becomes:

$$VACT = V_k*KF + V_{k-1}*KF +VACT_{k-1}*PF3$$

Proportional plus integral velocity control is characterized by a control transfer function having the form:

$$KP*[(s+KI)/s]*VE$$

Where:

s represents complex frequency
KP = proportional gain factor
KI = integral gain factor
VE = velocity error
    = VCMD - VACT

    Where:

VCMD = velocity command
VACT = actual velocity (scaled and compensated) Pseudo derivative feedback velocity control is characterized by a transfer function having the form:

$$KPDF*[KI/s]*VE-(KPDF*VACT)$$

    Where:
s represents complex frequency
KPDF is a gain factor equivalent to the velocity gain factor in proportional plus integral control and the other quantities have the same definitions as in the case of proportional plus integral control.

The signal processing module 20 effects the selected type of control using effective values of the gains KI, KP, and KPDF derived from user supplied values which may be transferred to the motor control 12 from the commissioning data store 64. Adjustment of the gain values is accomplished through adjustment parameters PADJ, PDFADJ,and KIADJ in accordance with the following:

$$KP(eff) = PADJ*KP(nominal)$$

$$KI(eff) = KIADJ*KI(nominal)$$

$$KPDF(eff) = PDFADJ*KPDF(nominal)$$

To provide increased velocity loop gain at and near zero velocity, a further gain modification factor KRO is applied in accordance with the following:

$$KP = (1 + KRO)KP(nominal)$$

$$KI = (1 + KRO)KI(nominal)$$

$$KPDF = (1 + KRO)KPDF(nominal)$$

The change of gain during low speed operation is effected at a constant rate over a speed range of from about 10 rpm to about 3 rpm. The value of KRO is a user specified friction compensation multiplier which is input from numerical control 10.

A current command is produced in response to the selected type of control taking into consideration the axis moment of inertia, the motor torque constant and the current scaling associated with the pulse-width modulation control signals to be applied to the power block 16. In addition, a current component produced in response to a direct torque command input is summed with the current command component derived from the velocity loop control algorithm.

The calculations performed to produce the current command implementing proportional plus integral control are:

$$ICMD = IKP*VE_k + IKI*I_k + TCMD/KT \qquad (2)$$

Where:

$I_k$ = integrator evaluation of the k update interval
= $VE_k + I_{k-1}$

Where:

$I_{k-1}$ = integrator evaluation of the k-1 update interval
IKI = internal integral gain
= $(IKP*KI*KIADJ)/C1$
Where:
C1 = constant accounting for conversion of units including conversion of time to time per sample interval and the multiplier of KIADJ
KIADJ = integral gain adjust factor
IKP = internal proportional gain
= $[KPADJ*KRO* (1 + JADJ)](C2*KP*JA)/(KT*AS)$
Where:
AS = power block current scale factor
C2 = constant accounting for conversion of units and the multiplier of KPADJ
JA = axis moment of inertia
JADJ = moment of inertia adjust factor
KPADJ = proportional gain adjust factor
KRO = low speed gain modification factor
KT = motor torque constant (torque/amp)
TCMD = direct torque command
$VE_k$ = VE at the k update interval

The calculations performed to produce the current command implementing pseudo derivative feedback control are:

$$ICMD = -IKPDF*VACT + PKI*I_k + TCMD/KT \qquad (3)$$

Where:

IKPDF = internal pseudo derivative gain factor
= $[KPDF*KRO*(1 + JADJ)](C2*KPDF*JA)/(KT*AS)$
PKI = internal integral gain factor
= $(IKPDF*KI*KIADJ)/C1$

and all other components have the definitions stated above.

Values of the axis moment of inertia JA, the torque constant KT, and the current scale factor AS may be stored with the commissioning data in the commissioning data store 64 of the numerical control 10. This data can be loaded once to data store 88 through the system data bus 26. The current command signals produced by signal processing module 20 are transferred over the motor controller bus 24 to the interface module 22

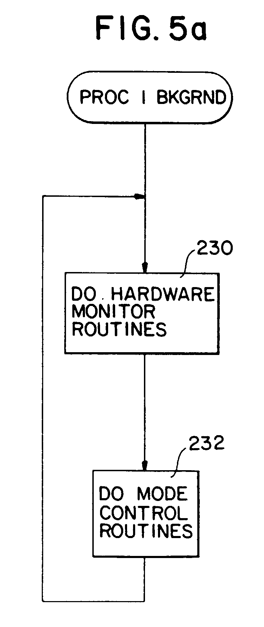

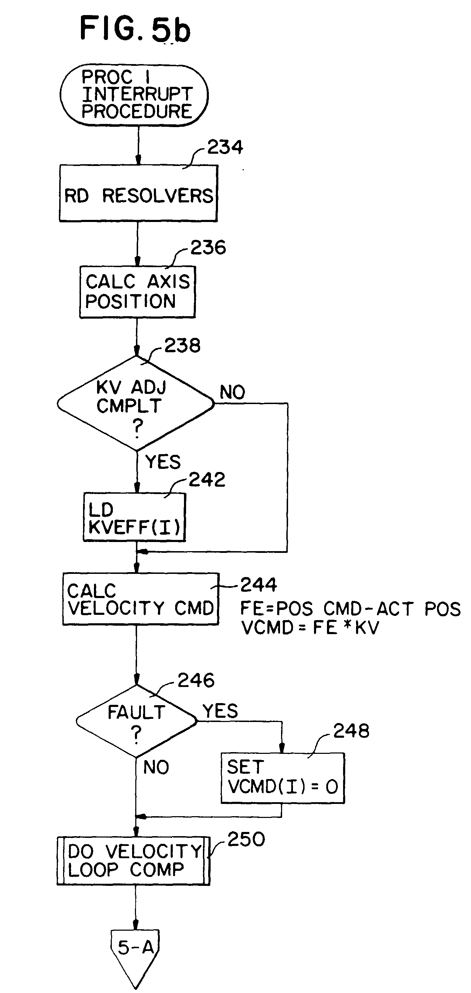

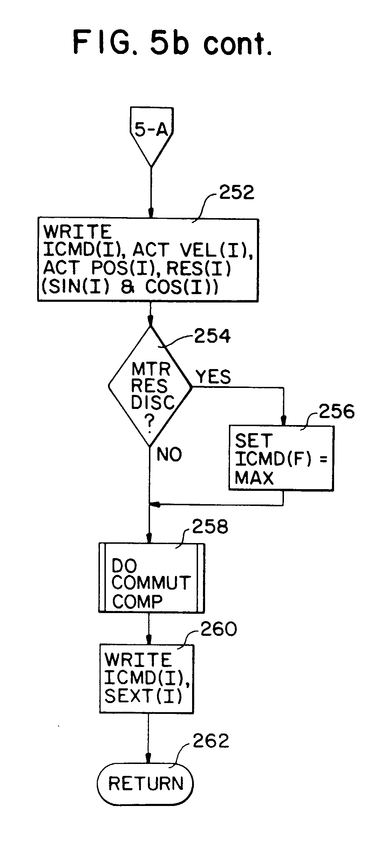

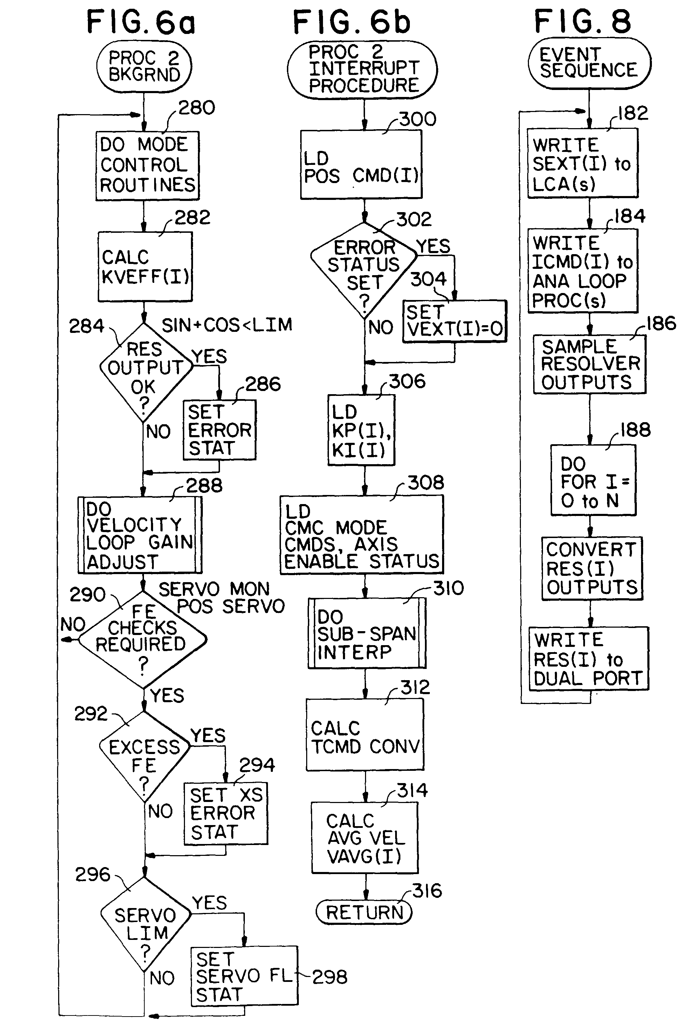

A detailed description of the procedures executed by the processors 80 and 86 to effect position loop and velocity loop control shall be described with reference to Figs. 5a, 5b, 6a, and 6b. While applicants have chosen to allocate tasks between the processors in the manner to be described, it will be appreciated that other allocations would serve equally as well, the primary consideration being the processing time consumed executing all of the tasks within the loop closure interval.

The routines executed by processor 80 are subdivided into background processing illustrated by the flow chart of Fig. 5a and interrupt processing illustrated by the flow chart of Fig. 5b. Background programs are executed in a continuous loop until the occurrence of an interrupt associated with the loop closure interval. Process step 230 effects execution of the hardware monitoring routines 208. These routines examine status flags indicating hardware failures. The flags may be set during initialization or at any time a hardware failure is detected by built-in diagnostic tests during normal operation. Upon completion of the execution of the hardware monitoring routines, processing continues at step 232 where the mode control routines 210 are executed. These procedures control the transition from one mode of operation or state of the signal processing module 20 to another. These routines provide verification of all conditions required to proceed from one control state to another.

Upon occurrence of an interrupt signal associated with the loop closure interval, execution of the procedure illustrated by the flow chart of Fig. 5b is initiated by processor 80. The interrupt procedure begins with execution of the position measurement routines 200. At process step 234 the resolver output signals for all resolvers in use are read from interface module 22. These output signals are stored by the interface module 22 in memory locations which are directly accessible by signal processing module 20. The resolver output signals read by process step 234 are loaded into dedicated locations of memory 78. At process step 236 positions for all axes are calculated as the inverse tangent of the ratio of the resolver output signals. The axis positions are represented by dimensionless units defining the resolution of the measured positions.

Processing of the routines associated with position loop control procedures 202 begins at decision step 238 where it is determined whether or not processor 86 has completed adjustment of the position loop gains $KV_I$ (the subscript I designating an index to identify the individual position loop gain values). If gain adjustment has not been completed, the adjusted gain values are not available for loading in local memory and step 242 is skipped. Assuming that the position loop gain adjustment has been completed, execution of the interrupt procedure continues at process step 242 where the position loop gain values $KVEFF_I$ are loaded to working memory locations for use by processor 80. As in the case of the position measurement routines 200, the position loop processing routines perform the position loop calculations for all the controlled motors. At process step 244 velocity commands are produced by: (a) calculating following errors $FE_I$, i.e., the difference between commanded position POS $CMD_I$ and measured position ACT $POS_I$; and, (b) multiplying the following errors $FE_I$ by the associated position loop gains $KVEFF_I$. At decision step 246 it is determined whether a hardware fault status has been set true by the background hardware monitoring routines. In the event a fault status has been set for any of the controlled position loops, all velocity commands $VCMD_I$ are set equal to zero at process step 248. This has the effect of preventing the generation of excessive current commands that might result in damage to the motor or the switching transistors.

Execution of the interrupt procedure continues with execution of the velocity loop routines 204 at process step 250. Current commands $ICMD_I$ for all of the controlled motors are generated by execution of the velocity loop routines 204. Instantaneous measured velocity is first calculated from the change of position during the loop closure interval. Measured velocity is compensated in accordance with equation (1) to produce $VACT_I$ for all controlled motors. For motors being controlled in accordance with the proportional plus integral control method, current commands $ICMD_I$ are calculated in accordance with equation (2) and for motors controlled in accordance with the pseudo derivative feedback method velocity commands are computed in accordance with equation (3). At process step 252 values for the commanded current $ICMD_I$, measured velocity ACT $VEL_I$, measured position ACT $POS_I$ and the transducer output signals $SIN_I$ and $COS_I$ are written to memory 78.

Execution of the interrupt procedure continues with execution of the commutation control anticipation routines 206 beginning at decision step 254. There it is determined whether any of the status flags have been set indicating that a loss of feedback has been detected by interface module 22. In the event a loss of feedback is detected the current command $ICMD_F$ associated with the failed position loop is set equal to a maximum value at process step 256. If no disconnection has been detected new commutation pattern control signals $SEXT_I$ are produced at process step 258. Process step 258 is skipped in connection with any motor for which a loss of feedback has been detected. This has the effect of ceasing commutation of stator coil current for the associated motor while maintaining the applied current at a maximum value to effect magnetic detenting of the motor. The loss of feedback is indicated to the CNC by an output from signal processing module 20 through system bus 26.

A set of commutation pattern control signals is associated with rotor relative position by means of a conversion table using a calculated anticipated rotor position. The rotor position expected to be attained during the next loop closure interval is calculated as the sum of the last read rotor position $\Theta_{I(k-1)}$) and the product of the average relative velocity $VAVG_I$ and the loop closure interval time $\delta t$. For a conventional six-zone motor, rotor position is divided into six equal angular zones or sextants, each zone being associated with a set of commutation pattern control signals from which the conductive state of the stator coils is determined as follows:

| Zone (radians) | Sextant | Sextant Data | | | U V W Conduction | |
|---|---|---|---|---|---|---|
| | | S3 | S2 | S1 | CW | CCW |
| $0 - \pi/3$ | 1 | 0 | 0 | 1 | W to V | V to W |
| $\pi/3 - 2\pi/3$ | 2 | 0 | 1 | 0 | U to V | V to U |
| $2\pi/3 - \pi$ | 3 | 0 | 1 | 1 | U to W | W to U |
| $\pi - 4\pi/3$ | 4 | 1 | 0 | 0 | V to W | W to V |
| $4\pi/3 - 5\pi/3$ | 5 | 1 | 0 | 1 | V to U | U to V |
| $5\pi/3 - 0$ | 6 | 1 | 1 | 0 | W to U | U to W |

Where:

CW = clockwise direction of rotation
CCW = counter-clockwise direction of rotation U, V, and W designate terminals of the stator coil winding network and conduction is defined in the direction of positive toward ground

While the loop closure interval is fixed, the interval of change of commutation patterns is a function of velocity. It is therefor necessary to determine the instant within the loop closure interval at which the rotor position is anticipated to traverse a zone boundary. The anticipated time for the rotor relative position to reach the zone boundary is calculated by dividing the distance between the rotor current position and the zone boundary by the measured velocity. The calculated anticipated commutation time is divided by a predetermined loop closure sub-interval chosen to produce an acceptable error between actual and ideal rotor relative position at the instant of commutation at the maximum anticipated velocity. A commutation anticipation time TC is represented by the binary equivalent of the calculated number of loop closure sub-intervals and is included in each commutation pattern control word $SEXT_I$.

Execution of the commutation routines 206 is completed at process step 260 where the current commands $ICMD_I$, and commutation pattern control words $SEXT_I$ including commutation anticipation times $TC_I$ are written to dedicated storage locations for the interface module 22. Following completion of process step 260 interrupt procedure processing ends and processor 80 returns to execution of the background routines through the return of terminal 262.

Execution of routines allocated to processor 2 shall be described with reference to Figs. 6a and 6b. A flow chart of the procedure for background processing performed by processor 86 is illustrated in Fig. 6a. At process step 280 mode control routines 224 controlling the transition from state to state of the signal processing module 20 are executed. Process step 282 executes position loop gain adjustment routines 222 to calculate adjusted values of the position loop gains $KVEFF_I$ for each of the motors under position loop control. It will be recalled that decision step 238 of the interrupt procedure for processor 80 detects the completion of the calculation of adjusted position loop gains $KVEFF_I$ by processor 86. A status flag is set upon completion of the calculations associated with process step 282.

Execution of background programs continues with execution of the resolver output data checking routines 228 beginning at decision step 284. A determination is made as to the integrity of the resolver output signals by summing the squares of the sine and cosine values for each position transducer and comparing the sum to a limit value. If the sum is less than the limit value, an error status flag associated with the transducer for which the output data is erroneous is set at process step 286.

Background program execution continues with execution of the velocity loop gain adjust routines at process step 288. Gain values are adjusted by multiplication of the selected gain values by the gain adjust values as previously described. Gain values adjusted with process step 288 include the proportional gains $KP_I$, integral gains $KI_I$, and the pseudo derivative gains $KPDF_I$. The adjusted values are loaded in local memory 78 for access by processor 80 for execution of the velocity loop processing routines 204 previously described.

Background program processing continues with execution of the servo error checking routines 226 beginning at decision step 290. There it is determined whether servo monitoring has been disabled and whether the particular motor being controlled is controlled as a position loop servomechanism or a velocity loop servomechanism. If servo monitoring is disabled steps 292 through 298 are skipped and execution of the background programs continues at process step 280 until the occurrence of an interrupt. Assuming servo monitoring is enabled and that a position loop servo is selected, processing continues at decision step 292 where it is determined whether or not the magnitude of any of the following errors $FE_I$ exceed a first limit value LIM1. The limit value LIM1 is associated with an excessive lag between the commanded position and the measured position and a typical response is to reduce the commanded rate of change of position until the excess error condition is eliminated. Assuming that an excess following error condition is detected by decision step 292, an excess error status flag is set at process step 294. Processing continues at decision step 296 where it is determined if any of the following errors $FE_I$ exceed a second limit value LIM2 associated with a servo failure. A typical response to the detection of following error in excess of the limit value LIM2 is to initiate an emergency stop and thereby remove power from the affected motor. Assuming that a following error magnitude in excess of the limit LIM2 is detected at decision step 296, the error flag associated with the affected motor is set at process step 298. Thereafter execution of the background procedures continue at process step 280 until the occurrence of an interrupt.

The interrupt signal used to initiate the execution of the interrupt procedure illustrated by the flow chart of Fig. 5a also initiates the execution of the interrupt procedure illustrated by the flow chart of Fig. 6b. It will be understood therefore, that the processing of interrupt procedures by the processors 80 and 86 occurs simultaneously.

Referring to Fig. 6b, process step 300 the position commands POS $CMD_I$ produced by execution of the sub-span interpolation routines 216 to are loaded in local memory from memory 78. Decision step 302 determines whether any of the error status flags have been set by execution of the background routines of Fig 6a. In the event that decision step 302 detects that an error atatus flag has been set, the external velocity command $VEXT_I$ for the affected velocity loop is set equal to zero by process step 304. At process step 306 gain values for the velocity loop including proportional gains $KP_I$, integral gains $KI_I$ and pseudo derivative feedback gains $KPDF_I$ are loaded to immediate memory locations such as, for example, data store 88 in preparation for gain adjustment performed during background program processing. At process step 308 mode command data and axis enable status data from the numerical control are loaded to local memory. These data include the servo type, ie., velocity or position, and flags indicating which of the controlled motors are enabled. Selection of control loops is effected by the enable commands. Additionally, external velocity commands $VEXT_I$ input by the numerical control are loaded from memory 78 to local storage locations.

Interrupt procedure processing continues with execution of the sub-span interpolation routines 216 at process step 310. Sub-span interpolation effects the reduction of change of position commanded by the numerical control at the update interval into subincrements to be output as position commands POS $CMD_I$ at the loop closure interval. The update interval of the numerical control is effectively subdivided into the loop closure interval of motor control 12 to produce incremental position commands for the position loop servos. For sub-span interpolation along a straight line the algorithm to produce position commands is as follows:

$$POS\ CMD_k = POS\ CMD_{k-1} + S*(\delta t \backslash UT)$$

Where:

S = change of position at update interval
$\delta t$ = sub-span interval
UT = update interval

and the subscripts k and k-1 indicate respectively the current and previous values

The newly created position commands POS $CMD_I$ are stored in memory 78 for access by processor 80.

Interrupt procedure processing continues with execution of the torque command conversion routines 218 at process step 312. Torque command conversion effects the conversion from engineering units to current command units using the values for the torque constant KT and the current scale factor AS. Torque commands $TCMD_I$ are stored in memory 78 for access by processor 80.

Processing of the interrupt procedure proceeds with execution of the average velocity calculation routines 214 at process step 314. Motor average velocity is calculated for each motor under control as the average change of rotor position over a predetermined number of loop closure intervals as follows:

$$VAVG = (\Theta_k - \Theta_{k-n})/p$$

Where:

$\Theta$ = rotor relative position
p = the number of loop closure intervals used for averaging

and k and k-n designate values for respectively the current and the pth previous loop closure intervals

Average velocities $VAVG_I$ are stored in memory 78 for access by processor 80 which uses the average velocity values in connection with execution of the commutation anticipation routines 206. Upon completion of the calculation of average actual motor velocity, execution of the background programs is continued by return through terminal 316.

To facilitate an explanation of the operation of the interface module 22, a description of the connection of the motor stator windings to the power source via the switching transistors shall be provided with reference to the power block module 16.

POWER BLOCK MODULE

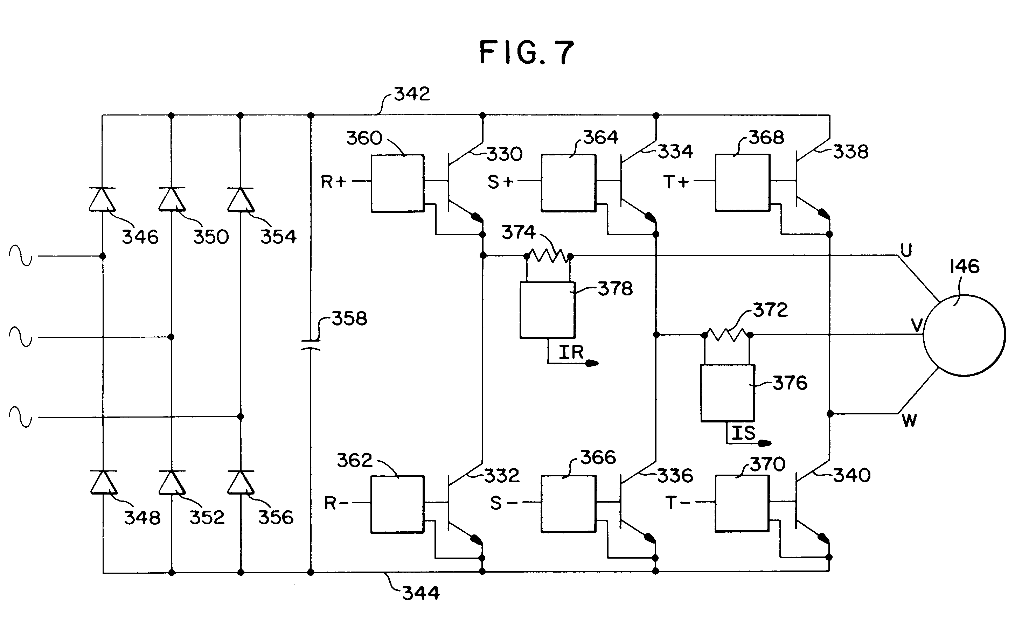

A detailed description of the circuitry used for applying power to the stator coils of the controlled motors shall be given with reference to Fig. 7. A brushless DC motor such as motor 146 includes a network of three distributed stator windings connected in, for example, a conventional wye configuration to terminals U, V, and W. Current may be conducted through a desired combination of the stator windings by providing a current path between a DC power supply and the appropriate combination of the terminals U, V, and W. The desired combination is determined from the sextant data contained in the commutation pattern control words $SEXT_I$.

As is conventional, power may be derived from a source of three phase AC current which is rectified and filtered. In the preferred embodiment, three phase power is rectified by the network of diodes 346 through 356 and filtered by capacitor 358 to produce a DC voltage having a positive polarity at line 342. A DC current return is provided by line 344 (the lines 342 and 344 are referred to collectively as the power rails of the power block module 16).

Current is applied to the motor terminals through a network of switching transistors 330 through 340. Transistor pairs 330 and 332; 334 and 336; and, 338 and 340 provide source and return switches for, respectively terminals U, V, and W of motor 138. It will be appreciated that for each transistor pair, it is intended that only one transistor be conducting at any time to provide a path for DC current between, alternatively, the lines 342 and 344, and the motor terminal. Each transistor is switched between its conducting and nonconducting conditions by means of conventional isolation circuits 360 through 370 providing signal isolation between low level control signals and the currents switched. Applicants have chosen isolation circuits including optical couplers and base drive circuitry for the switching transistors. Control of current in the stator windings is achieved by pulse width modulation of current conducted by the switching transistors. Pulse width modulation is effected in response to the current commands $ICMD_I$ and measured stator currents derived from current sampling shunt resistors 372 and 374. These resistors produce voltages representative of the magnitude of current through the stator windings. Interface circuits 376 and 378 convert the amplitude analogue representation of motor current appearing across shunt resistors 372 and 374, respectively, to pulse width modulated representations and provide transformer isolation for transferring the measured motor current signals in pulse width modulated form to the interface module 22. The frequency of pulse-width modulation of the current feedback signals is such that the modulation does not introduce significant time lag into the representation of motor current. The instantaneous states of the switching transistor control signals is determined by the sextant data of the commutation pattern control word signals $SEXT_I$ and pulse width modulation control signals generated to maintain a desired stator winding current. The control signals are generated in pairs designated by R+, R-; S+, S-; and, T+, T- and have a delay period introduced to allow for the transition time between conducting and nonconducting states of the switching transistors 330 through 340. The generation of the control signals R+, R-, S+, S-, T+, and T- shall be described in greater detail in conjunction with the following description of the interface module 22.

INTERFACE MODULE

A detailed description of the interface module 22 shall be had with reference to Figure 4. As has been previously stated, the interface module 22 provides the interface for signals between the position transducers and power block 16 and the signal processing module 20. Data exchanged over the controller bus 24 passes through the data transceiver 124 to local bus 126. Data is exchanged through the dual port memory 128. Dual port memory 128 is addressed directly from the signal processing module 20 on address bus 130 and from local address bus 131.

The interface nodule 22 provides signal interfacing for up to four motors and associated position transducers. In the preferred embodiment position transducers 132, 134, 136 and 138 are resolvers directly measuring the relative position of the rotor and stator for each motor 140, 142, 144 and 146. A resolver drive control 148 produces the required excitation signal, i.e., an AC signal impressed on the resolver rotor windings. Resolver interface 150 receives the output signals from the resolver stators. The resolver output signals are input to the analog multiplexer and switching circuitry 152 from which selected analog signals are input to the analog-to-digital converter 154. Digital representations of the resolver output sine and cosine amplitudes are available at the output of the analog-to-digital converter 154 and are transferred over bus 156 to the dual port memory 128 for access by the signal processing module 20. In addition to the position transducers 132 through 138 illustrated in Figure 4, the interface module 22 provides excitation signals and interfaces for up to two additional resolvers for each of the four axes of motion associated with the motors 140 through 146. These additional resolvers may be driven directly by the motors or may be driven by motion of the machine moveable members to measure positions thereof.

Interface module 22 produces pulse-width modulated control signals for the commutation switching transistors in power block 16. The states of control signals for the switching transistors of power block 16 are controlled by logic cell arrays 160 and 162 according to the commutation demanded by the commanded motor velocity. Each of the logic cell arrays 160 and 162 is associated with two of the motors 140 through 146. The switching transistor control signals are output by power block input/output interface 158.

Current control for each of the motors 140 through 146, defining the pulse width of the switching transistor control signals, is accomplished by means of analog loop processors 164 through 170. Further details of these processors shall be described hereinafter. Each analog loop processor produces a positive and negative pulse-width modulated control signal in response to signals representing measured motor current and a current command.

The current commands used by the loop processors 164 through 170 are analogue forms of the current commands produced by signal processing module 20. These current command signals are available in dual port memory 128 in digital form and are recalled therefrom one-by-one and loaded into data latch 172 as an input to digital to analogue converter 174. An amplitude analogue representation of the current command produced by converter 174 is periodically sampled and held by the analogue loop processors 164 through 170.

Measured motor current as used by the loop processors 164 through 170 is derived from the shunt resistors 372 and 374 described in connection with the power block module 16. Although motor current may be monitored for each of the three terminals of motor stator windings, it is sufficient to monitor only two, and infer the third. Power block input/output interface 158 provides circuitry to receive the high frequency pulse width modulated representation of motor current and convert these signals to low level DC signals compatible with the logic cell arrays. The low level signals are input to the logic cell arrays 160 and 162 and the selected measured current is gated therefrom in pulse-width modulated form to the appropriate ones of the analog loop processors 164 through 170 in accordance with the active rotor position as represented by the sextant data of each commutation pattern control word $SEXT_I$.

The current command, current feedback and current error signals from each of the analog loop processors 164 through 170 are input to the analogue multiplexer and switches 152. Digital representations of these analogue outputs are produced by analogue-to-digital converter 154. These digital representations are available to the signal processing module 20 at the dual port memory 128.

The logic cell arrays 160 and 162 associate the sextant data of the commutation pattern control words $SEXT_I$ and the pulse-width modulated command signals with the appropriate transistor switches of power block 16 to produce control signals therefor. The Boolean expressions relating the transistor switch control signals, the sextant data, and the pulse width modulated control signals are as follows:

$$R+ = MODCW \ \underline{AND} \ [(S3\backslash S2S1\backslash) \ \underline{OR} \ (S3\backslash S2S1)]$$

$$\underline{OR} \ MODCCW \ \underline{AND} \ [(S3S2\backslash S1) \ \underline{OR} \ (S3S2S1\backslash)]$$

$$R- = MODCW\backslash \ \underline{AND} \ [(S3\backslash S2S1\backslash) \ \underline{OR} \ (S3\backslash S2S1)]$$

$$\underline{OR} \ MODCCW\backslash \ \underline{AND} \ [(S3S2\backslash S1) \ \underline{OR} \ (S3S2S1\backslash)]$$

$$S+ = MODCW \ \underline{AND} \ [(S3S2\backslash S1) \ \underline{OR} \ (S3\backslash S2S1)]$$

$$\underline{OR} \ MODCCW \ \underline{AND} \ [(S3\backslash S2\backslash S1) \ \underline{OR} \ (S3\backslash S2S1\backslash)]$$

$$S- = MODCW\backslash \ \underline{AND} \ [(S3S2\backslash S1\backslash) \ \underline{OR} \ (S3S2\backslash S1)]$$

$$\underline{OR} \ MODCCW\backslash \ \underline{AND} \ [(S3\backslash S2\backslash S1) \ \underline{OR} \ (S3\backslash S2S1\backslash)]$$

$$T+= MODCW \ \underline{AND} \ [(S3\backslash S2\backslash S1) \ \underline{OR} \ (S3S2S1\backslash)]$$

$$\underline{OR} \ MODCCW \ \underline{AND} \ [(S3\backslash S2\backslash S1) \ \underline{OR} \ (S3S2\backslash S1\backslash)]$$

$$T- = MODCW\backslash \underline{AND} [(S3\backslash S2\backslash S1) \underline{OR} (S3S2S1\backslash)]$$

$$\underline{OR} \; MODCCW\backslash \underline{AND} [(S3\backslash S2S1) \underline{OR} (S3S2\backslash S1\backslash)]$$

Where:

MODCW = pulse width modulated control signal with leading edge delay producing clockwise rotation
MODCW\ = inversion of MODCW with leading edge delay
MODCCW = pulse width modulated control signal with leading edge delay producing counter clockwise rotation
MODCCW\ = inversion of MODCCW with leading edge delay
S1 = sextant data 1
S1\ = inversion of S1
S2 = sextant data 2
S2\ = inversion of S2
S3 = sextant data 3
S3\ = inversion of S3

The logic cell arrays decode the sextant data and gate the results with the pulse width modulated control signals to produce the transistor control signals. These control signals are output by the logic cell arrays 160 and 162 to the power block input output interface 158 and applied to the switching transistors of power block 16.

The delay required to accommodate the transistor turn-off delay noted in connection with the description of the circuitry of power block module 16 is effected at the logic cell arrays. Counters are employed to measure selectable predetermined intervals beginning with the occurrence of a leading edge of the pulse width modulation signals. The duration of the delay is selectable between two values, the selection being controlled by signals produced by the processor module in response to user choices stored as commissioning data. The delay selection signals effect gating of predetermined timing signals with the pulse width modulation signals at the leading edges thereof.

The position transducer outputs are periodically sampled at a rate referred to herein as the loop closure rate defining a predetermined time interval referred to as the loop closure interval. In applicant's preferred embodiment the loop closure interval is 500 microseconds. It will be appreciated that the rotor relative position may be such that stator coil commutation must occur during the loop closure interval. Therefore, as previously described, a commutation anticipation time $TC_I$ is included with each sextant word $SEXT_I$ to determine the instant of commutation during a loop closure interval. A time based counter signal produced by counter circuitry 118 of the signal processing module 20 is compared by the logic cell arrays 160 and 162 with the anticipated commutation time to detect the instant of commutation. The logic cell arrays latch the sextant data of the sextant word in active sextant data stores within the arrays at the instant of commutation.

Control of the sequence of events performed by interface module 22 is accomplished by continuous sequential generation of addresses for a read only memory included in sequence control 178. The data retrieved from the read only memory is decoded to produce signals controlling: transfer of data to and from dual port memory 128; conversion of signals by analogue to digital converter 154; latching of digital data at latch 172 for digital to analogue converter 174; selection of analogue signals at analogue multiplexer 152; and, writing of sextant words $SEXT_I$ to the logic cell arrays 160 and 162.

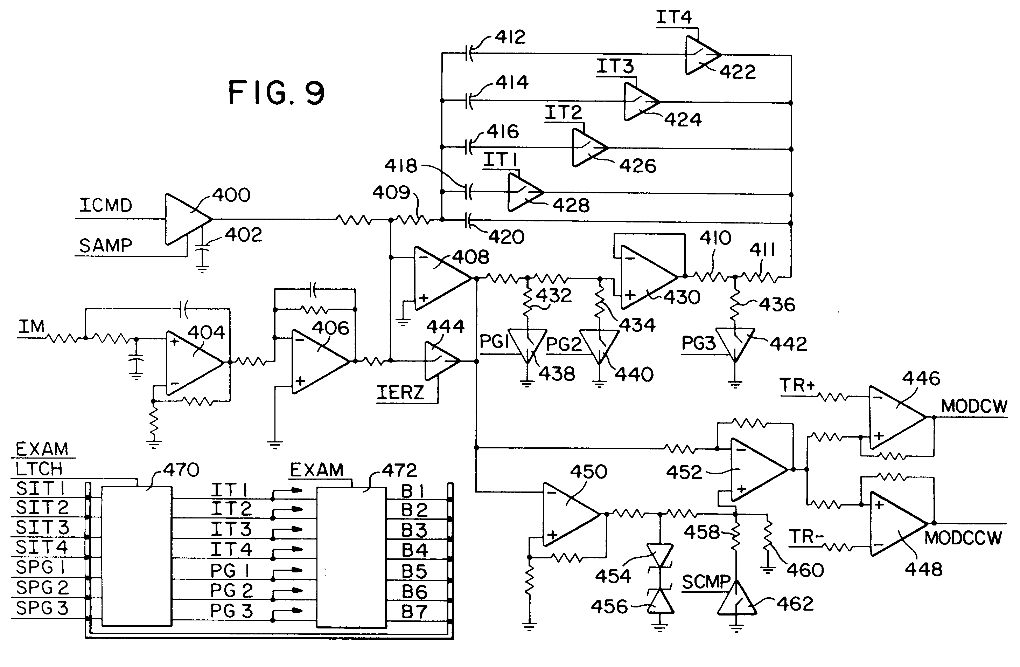

The flow chart of Fig. 8 represents the sequence of events performed by interface module under sequence control during the loop closure interval. At event step 182 sextant words $SEXT_I$ are written to the logic cell arrays from dual port memory 128. At event step 184 current commands $ICMD_I$ are read from dual port memory, converted to an amplitude analogue representation at digital to analogue converter 174, and sampled and held at analogue loop processors 164 through 170. At event step 186 the resolver output signals are sampled and held on sample and hold circuits included in resolver interface 150. At event step 188 the resolver output signals are converted to digital representations and the digital representations are written to dual port memory 128 for each resolver in turn. The resolver sampling control signals are synchronized with the resolver excitation signals by sequence control 178. During normal operation, the event steps are continuously repeated as represented by the loop from event step 188 to event step 182.

ANALOGUE LOOP PROCESSORS

Each analogue loop processor produces a current error signal by comparison of the measured current with the commanded current. To effect this comparison, the pulse-width modulated form of the measured motor current is first demodulated to an amplitude analogue thereof. The current error amplifier portion of each analogue loop processor implements a proportional plus integral transfer function. Selection of an integrator time constant and proportional gain factor is accomplished by data input via local data bus 126. The resultant error signal is voltage compensated to account for the "dead band" produced in the switch control signals to prevent shunting of the power module rails as previously described in connection with power block module 16.

To produce the desired positive and negative pulse-width modulated control signals, each analogue loop processor compares the compensated current error signal to two anti-phase triangle wave signals produced by free running triangle wave generator 176. The resulting pulse-width modulated control signals are input to logic cell arrays 160 and 162 where, in accordance with the sextant data of the commutation pattern control words $SEXT_I$, the appropriate switch command signals are produced for the commutation of the motor stator windings.

A detailed description of the analogue loop processors shall be given with reference to Fig. 9. Control signals for analogue switches used to effect selections of gain and time constant values associated with the current loop error amplifier are latched in data latch 470. The contents of latch 470 may be examined at the input terminals of each loop processor module through buffer 472. Data is entered into latch 470 and verified under control of signals generated by signal processor 20.

Continuing with reference to Fig. 9, an analogue representation of commanded current is sampled and held by operational amplifier 400 arranged as a sample and hold circuit with holding capacitor 402. The hold control signal for each current sample and hold is produced by sequence control 178 at a predetermined interval as previously described. Pulse width modulated motor current is demodulated to an amplitude analogue representation by operational amplifiers 404 and 406 arranged as a level shifter and three pole Butterworth filter. The low level DC pulse width modulated representation of measured motor current is thereby converted to an AC amplitude analogue representation.

A current error signal is produced so as to implement a proportional plus integral transfer function. The demodulated measured motor current is summed with the current command sample at the input of operational amplifier 408 which serves as an integrator. A fixed capacitance providing a base time constant is provided by capacitor 420. To permit program modification of the integrator time constant, capacitors 412, 414, 416, and 418 are made selectably connectable by analogue switches 422, 424, 426, and 428, respectively. Switches 422 through 428 are controlled by signals produced by processor module 20 in response to user selections stored as commissioning data. A base proportional gain is determined by resistors 409, 410, and 411. Operational amplifier 430 in combination with selectably connectable resistances 432, 434, and 436 provide selectable proportional gains. Analogue switches 438, 440, and 442 connect the resistors 432, 434, and 436, respectively, to ground to achieve the selected proportional gain value. The control signals for switches 438, 440, and 442 are produced by processor module 20 in response to user selections stored as commissioning data. In the event of a failure and during initialization, analogue switch 444 will be closed in response to an enable signal produced by processor module 20 forcing the current error output to zero.

Pulse width modulation signals are produced by comparing the amplitude analogue representation of current error with anti-phase triangle waveform signals produced by triangle wave generator 176. Comparators 446 and 448 perform the comparisons between the triangle waves and the current error signal.

As previously stated, to avoid a potential shunt between the power rails of power block module 16, it is desirable to delay turn-on of the "OFF" transistor in each transistor pair to permit the "ON" transistor to cease conducting. The desired delay appears in the motor current as a "dead band" for which compensation is provided in the current error signal prior to generation of the pulse width modulation control signals. A compensating voltage is added to the current error signal to compensate for the discontinuity associated with the "dead band". The magnitude of this voltage, in accordance with the selectability of the duration of the delay, is selectable between two predetermined values by user selection stored as commissioning data. Operational amplifier 450 compares the current error signal to ground and the result is applied to oppositely poled zener diodes 454 and 456. These diodes clamp the amplifier output to the reverse voltage of the reverse biased zener diode and the forward voltage of the forward biased zener diode. This voltage is applied to a voltage dividing network including series resistances 458. To enable selection of the magnitude of the added voltage, resistor 458 is selectably connectable in parallel with resistor 460 by means of analogue switch 462. The control signal for switch 462 is produce by signal processing module 20 in response to a user selection stored as commissioning data. The resultant voltage at the junction of resistances 464 and 460 is summed with the error signal at operational amplifier 452. The effect of the compensating circuitry is to add or subtract a compensating voltage when the current error passes through the "dead band".

## Claims

1. A method for controlling a brushless DC motor (146) having a plurality of field coils fixed to a motor stator, a rotor rotatable relative to the stator and a position transducer for measuring the relative angular position of the rotor relative to the stator, wherein motor current is commutated from one pattern of conduction through motor field coils to another according to the position of the rotor relative to the stator, in which method: 1) velocity command signals (VCMD), which define a desired relative velocity of the motor rotor and motor stator, are periodically produced; 2) the relative angular position of motor rotor and motor stator (ACT POS) is periodically measured by the use of the position transducer; 3) current command signals (ICMD), defining a desired motor current, are periodically produced (250 of Fig 5b) in response to the velocity command signals and measured rotor angular position (ACT POS); and 4) commutation pattern control signals (SEXT) defining a pattern of conduction of motor current through the motor field coils are produced in response to relative position of the motor rotor (ACT POS);
characterised in that

a) the position of the rotor relative to the stator is periodically measured at a loop closure rate defining a predetermined time interval (dt);
b) the current command signals (ICMD) are produced at the loop closure rate;
c) the commutation pattern control signals are periodically produced at said loop closure rate (258) and include a commutation anticipation signal (TC) representing the instant of commutation from one pattern of conduction to another within the said predetermined time interval.

2. A method according to Claim 1 further characterised in that the current command signals (ICMD) are produced by periodic execution (250 of Fig. 5b) of a procedure (204) implementing velocity control according to a velocity loop transfer function.

3. A method according to Claim 2 further characterised in that the current command signals (ICMD) are produced in response to, selectively, a first velocity loop transfer function defining control of the proportional-plus-integral type and a second velocity loop transfer function defining control of the pseudo derivative feedback type.

4. A method according to Claim 3 further characterised in that gain factors (KP, KI, KPDF) of the selected velocity loop transfer function are adjusted in response to adjust signals (PADJ, KIADJ, PDFADJ) during execution of the procedure producing the current command signals (ICMD).

5. A method according to Claim 4 further characterised in that a value for a moment of inertia (JA) of the motor and its associated load used in the selected velocity loop transfer function is adjusted in response to an adjust signal (JADJ) during execution of the procedure producing the current command signals (ICMD).

6. A method according to Claim 1 further characterised in that the commutation anticipation signal (TC) is determined by dividing by relative rotor velocity, the distance from the present rotor relative position to the rotor relative position at which commutation will next be required.

7. A method according to Claim 1 further characterised in that pulse-width modulation signals (MODCW, MODCCW) are produced in accordance with a proportional-plus-integral transfer function operating on a difference between commanded motor current (ICMD) and measured motor current, the transfer function being implemented with a selectable gain factor and a selectable integral time constant

8. A method according to Claim 1 further characterised in that the velocity command signals are produced by periodic execution (244 of Fig. 5b) of a procedure (202) implementing position control responsive to position commands (POS CMD).

9. A method according to any one of the preceding claims wherein devices delivering current to the motor are controlled in response to switch control signals (R+, R-. S+, S-, T+, T-) periodically produced (182) of Fig 8) in response to the commutation pattern control signals (SEXT) and pulse width modulation control signals (MODCW, MODCCW) generated from comparison of measured motor current and the current command signals (ICMD).

10. An apparatus for controlling a brushless DC motor (146) comprising a plurality of field coils fixed to a motor stator, and a rotor rotatable relative to the stator, the apparatus being operative to commutate motor current from one pattern of conduction through the motor field coils to another, the apparatus comprising a signal processing means (80) for (i) periodically producing velocity commands (VCMD) defining a desired relative velocity of the motor rotor; (ii) periodically measuring the relative angular position of the motor rotor relative to the motor stator by the use of a position transducer; (iii) periodically producing, current command signals (ICMD) defining a desired motor current in response to the velocity command signals (VCMD) and measured rotor position (ACT POS); and (iv) producing commutation pattern control signals (SEXT) defining a pattern of conduction of motor current through the motor field coils in response to the relative angular position of the motor rotor (ACT POS); characterised in that the position transducer is operative to measure the angular position of the rotor at a loop closure rate defining a pre-determined timed interval (dt); the current command signals (ICMD) are produced at the loop closure rate; the commutation pattern control signals (SEXT) are periodically produced at said loop closure rate and include a commutation anticipation signal (TC) representing the instant during the predetermined interval (dt) when change from one pattern to another is to occur; and the signal processing means (80) includes logic means (162, 162) for periodically producing control signals (R=,R-,S+,S-,T+,T-) for controlling application of current to the motor in response to the commutation pattern control signals (SEXT$_l$) and pulse width control signals (MODCW, MODCCW) generated from comparison of measured motor current and the current command signals (ICMD).

11. Apparatus according to Claim 10 further characterised in that the signal processing means (80) produces current command signals (ICMD) by execution of velocity loop routines (204) implementing velocity control according to a velocity loop transfer function.

12. Apparatus according to Claim 10 further characterised in that the signal processing means (80) produces velocity commands (VCMD) by periodic execution of position loop routines (202) implementing position control responsive to position commands (POS CMD).

13. Apparatus according to Claim 12 further characterised in that a single position transducer (138) is used to determine rotor relative position (ACT POS) and position control and velocity control are effected in response to measured position and measured velocity values derived from the position transducer.

14. Apparatus according to Claim 10 further characterised in that the pulse width modulation control signals (MODCW, MODCCW) are produced by means (164) including a current error amplifier (408) providing a proportional-plus-integral transfer characteristic and means (438,440,442,432,434,436) are provided for selecting a proportional gain factor for the current error amplifier and means (412,414,416,418,422,424,426,428) are provided for selecting an integral time constant for the current error amplifier.

**Patentansprüche**

1. Verfahren zum Steuern eines DC-Stromrichtermotors (146), der eine Vielzahl von Feldwicklungen, befestigt an einem Motorstator, einen Rotor, drehbar relativ zu dem Stator, und einen Positionstransducer zum Messen der relativen Winkelposition des Rotors relativ zu dem Stator aufweist, wobei der Motorstrom von einem Leitungsmuster über Motorfeldwicklungen in ein anderes gemäß der Position des Rotors relativ zu dem Stator umgeschaltet wird, wobei bei dem Verfahren: 1) Geschwindigkeitsbefehlssignale (VCMD), die eine gewünschte Relativgeschwindigkeit des Motorrotors und des Motorstators festlegen, periodisch hergestellt werden; 2) die relative Winkelposition des Motorrotors zu dem Motorstator (ACT POS) periodisch unter der Verwendung des Positionstransducers gemessen wird; 3) Strombefehlssignale (ICMD), die einen gewünschten Motorstrom festlegen, periodisch hergestellt werden (250 in Figur 5b) in Antwort auf die Geschwindigkeitsbefehlssignale und gemessene Rotorwinkelposition (ACT POS); und 4) Umschaltungsmusterbefehlssignale (SEXT), die ein Leitungsmuster des Motorstroms durch die Motorfeldwicklungen festlegen, in Antwort auf die Relativposition des Motorrotors (ACT POS) hergestellt werden;
dadurch gekennzeichnet, daß

a) die Position des Rotors relativ zu dem Stator mit einer Schleifenschließrate gemessen wird, die ein vorherbestimmtes Zeitintervall (dt) festlegt;
b) die Strombefehlssignale (ICMD) in der Schleifenschließrate hergestellt werden;
c) die Umschaltungsmustersteuersignale periodisch mit besagter Schleifenschließrate (258) hergestellt werden und ein Umschaltungsantizipationssignal (TC) enthalten, das den Zeitpunkt der Umschaltung von einem Leitungsmuster zu einem anderen innerhalb des besagten, vorherbestimmten Zeitintervalls repräsentiert.

2. Verfahren nach Anspruch 1, dadurch gekennzeichnet, daß die Strombefehlssignale (ICMD) durch periodisches Durchführen (250 in Figur 5b) einer Prozedur (204), implementierend eine Geschwindigkeitssteuerung gemäß einer Geschwindigkeitsschleifentransferfunktion, hergestellt werden.

3. Verfahren nach Anspruch 2, dadurch gekennzeichnet, daß die Strombefehlssignale (ICMD) in Antwort auf, wahlweise, eine erste Geschwindigkeitsschleifentransferfunktion, die Steuerung des Proportionalintegraltyps festlegt, und eine zweiter Geschwindigkeitsschleifentransferfunktion, die Steuerung des pseudodifferenzierenden Rückkopplungstyps festlegt, hergestellt werden.

4. Verfahren nach Anspruch 3, dadurch gekennzeichnet, daß verstärkungsfaktoren (KP, KI, KPDF) der ausgewählten Geschwindigkeitsschleifentransferfunktion in Antwort auf Anpassungssignale (PADJ, KIDJ, PDFADJ) während des Durchführens der Prozedur, die die Strombefehlssignale (ICMD) herstellt, eingestellt werden.

5. Verfahren nach Anspruch 4, dadurch gekennzeichnet, daß ein Wert für ein Trägheitsmoment (JA) des Motors und seiner assoziierte Last, verwendet in der ausgewählten Geschwindigkeitsschleifentransferfunktion, in Antwort auf ein Anpassungssignal (JADJ) während des Durchführens der Prozedur, die die Strombefehlssignale (ICMD) herstellt, eingestellt wird.

6. Verfahren nach Anspruch 1, dadurch gekennzeichnet, daß das umschaltungsantizipationssignal (TC) durch Dividieren das Umschaltungsantizipationssignal (TC) durch Dividieren des Abstandes von der gegenwärtigen Rotorrelativposition zu der Rotorrelativposition, bei der die nächste Umschaltung benötigt wird, durch die relative Rotorgeschwindigkeit bestimmt wird.

7. Verfahren nach Anspruch 1, dadurch gekennzeichnet, daß Pulsweitenmodulationssignale (MODCW, MODCCW) in Übereinstimmung mit einer Proportionalintegraltransferfunktion, arbeitend mit einer Differenz zwischen dem befohlenen Motorstrom (ICMD) und dem gemessenen Motorstrom, hergestellt werden, wobei die Transferfunktion mit einem wählbaren Verstärkungsfaktor und einer wählbaren Integrationszeitkonstante implementiert wird.

8. Verfahren nach Anspruch 1, dadurch gekennzeichnet, daß die Geschwindigkeitsbefehlssignale durch periodisches Durchführen (244 in Figur 5b) einer Prozedur (202), implementierend eine Positionssteuerung, antwortend auf Positionsbefehle (POS CMD), erzeugt werden.

9. Verfahren nach irgendeinem der vorangehenden Ansprüche, dadurch gekennzeichnet, daß Vorrichtungen, die Strom zu dem Motor liefern, in Antwort auf Schaltsteuersignale (R+, R-. S+, S-, T+, T-) gesteuert werden, die periodisch in Antwort auf Umschaltungsmustersteuersignale (SEXT) und Pulsweitenmodulatinssteuersignale (MODCW, MODCCW), erzeugt durch Vergleich des gemessenen Motorstroms mit dem gegenwärtigen Befehlssignal (ICMD), hergestellt werden (182 in Figur 8).

10. Vorrichtung zum Steuern eines DC-Motors (146) umfassend eine Vielzahl von Feldwicklungen, befestigt an einem Motorstator, und einen Rotor, der relativ zu dem Stator drehbar ist, wobei die Vorrichtung wirksam ist, um einen Motorstrom von einem Leitungsmuster über die Motorfeldwicklungen in ein anderes umzuschalten, wobei die Vorrichtung ein Signalbearbeitungsmittel (80) zum (i) periodischen Herstellen von Geschwindigkeitsbefehlen (VCMD), festlegend eine gewünschte Relativgeschwindigkeit des Motorrotors; (ii) zum periodischen Messen der relativen Winkelposition des Motorrotors relativ zu dem Motorstator unter Verwendung eines Positionstransducers; (iii) zum periodischen Herstellen von Strombefehlssignalen (ICMD), festlegend einen gewünschten Motorstrom in Antwort auf die Geschwindigkeitssignale (VCMD) und der gemessenen Rotorposition (ACT POS); und (iv) zum Herstellen von Umschaltungsmustersteuersignalen (SEXT), festlegend ein Leitungsmuster des Motorstroms durch die Motorfeldwicklungen in Antwort auf die relative Winkelposition des Motorrotors (ACT POS),umfaßt, dadurch gekennzeichnet, daß der Positionstransducer wirksam ist zum Messen der Winkelposition des Rotors mit einer Schleifenschließrate, festlegend ein vorherbestimmtes Zeitintervall (dt) ; die Strombefehlssignale (ICMD) mit der Schleifenschließrate hergestellt werden; die Umschaltungsmustersignale (SEXT) periodisch mit besagter Schleifenschließrate hergestellt werden und ein Umschaltungsantizipationssignal (TC) enthalten, darstellend den Zeitpunkt während des vorherbestimmten Intervalls (dt), in dem eine Veränderung von einem Muster zu einem anderen auftritt; und ein Signalbearbeitungsmittel (80) logische Mittel (162, 162) zum periodischen Herstellen von Steuersignalen (R=, R-, S+, S-, T+, T-) zum Steuern des Anlegens des Stroms an den Motor in Antwort auf die Umschaltungsmusterbefehlssignale (SEXT) und Pulsweitensteuersignale (MODCW, MODCCW), erzeugt durch Vergleich des gemessenen Motorstroms mit dem gegenwärtigen Befehlssignalen (ICMD), enthält.

11. Vorrichtung nach Anspruch 10, dadurch gekennzeichnet, daß das Signalbearbeitungsmittel (80) Strombefehlssignale (ICMD) durch Durchführen von Geschwindigkeitsschleifenroutinen (204), implementierend eine Geschwindigkeitssteuerung gemäß einer Geschwindigkeitsschleifentransferfunktion, erzeugt.

12. Vorrichtung nach Anspruch 10, dadurch gekennzeichnet, daß das Signalbearbeitungsmittel (80) Geschwindigkeitsbefehle (VCMD) durch periodisches Durchführen von Positionsschleifenroutinen (202), implementierend eine Positionssteuerung, antwortend auf Positionsbefehle (POS CMD), erzeugt.

13. Vorrichtung nach Anspruch 12, dadurch gekennzeichnet, daß ein einziger Positionstransducer (138) zum Bestimmen der Rotorrelativposition (ACT POS) verwendet wird, und daß die Positionssteuerung und Geschwindigkeitssteuerung in Antwort auf gemessene Positions- und gemessene Geschwindigkeitswerte, abgeleitet von dem Positionstransducer, durchgeführt wird.

**14.** Vorrichtung nach Anspruch 10, dadurch gekennzeichnet, daß die Pulsweitenmodulationssteuersignale (MODCW, MODCCW) durch Mittel (164) hergestellt werden, die einen Stromfehlerverstärker (408), bereitstellend eine Proportionalintegraltransfercharakteristik, und Mittel (438, 440, 442, 432, 434, 436) zum Auswählen eines Proportionalverstärkungsfaktors für den Stromfehlerverstärker bereitgestellt sind, und Mittel (412, 414, 426, 418, 422, 424, 426, 428) zum Auswählen einer Integrationszeitkonstante für den Stromfehlerverstärker bereitgestellt sind.

## Revendications

**1.** Un procédé pour commander un moteur à courant continu sans collecteur (146) ayant un ensemble d'enroulements de champ fixés à un stator du moteur, un rotor pouvant tourner par rapport au stator et un transducteur de position pour mesurer la position angulaire relative du rotor par rapport au stator, dans lequel le courant du moteur est commuté d'une configuration de conduction dans les enroulements de champ du moteur à une autre, conformément à la position du rotor par rapport au stator, dans lequel : 1) des signaux d'ordre de vitesse (VCMD), qui définissent une vitesse relative désirée du rotor du moteur et du stator du moteur, sont produits périodiquement; 2) la position angulaire relative du rotor du moteur et du stator du moteur (ACT POS) est mesurée périodiquement à l'aide du transducteur de position; 3) des signaux d'ordre de courant (ICMD), définissant un courant de moteur désiré, sont produits périodiquement (250 sur la figure 5b) en réponse aux signaux d'ordre de vitesse et à la position angulaire du rotor mesurée (ACT POS); et 4) des signaux de commande de configuration de commutation (SEXT) définissant une configuration de conduction du courant du moteur à travers les enroulements de champ du moteur sont produits en réponse à la position relative du rotor du moteur (ACT POS); caractérisé en ce que

   a) la position du rotor par rapport au stator est mesurée périodiquement à un rythme de fermeture de boucle définissant un intervalle de temps prédéterminé (DT);
   b) les signaux d'ordre de courant (ICMD) sont produits au rythme de fermeture de boucle;
   c) les signaux de commande de configuration de commutation sont produits périodiquement au rythme de fermeture de boucle (258), et ils comprennent un signal de prévision de commutation (TC) représentant l'instant de commutation d'une configuration de commutation à une autre, pendant l'intervalle de temps prédéterminé.

**2.** Un procédé selon la revendication 1, caractérisé en outre en ce que les signaux d'ordre de courant (ICMD) sont produits par l'exécution périodique (250 sur la figure 5b) d'une procédure (204) réalisant une commande de vitesse, conformément à une fonction de transfert de boucle de vitesse.

**3.** Un procédé selon la revendication 2, caractérisé en outre en ce que les signaux d'ordre de courant (ICMD) sont produits en réponse à, sélectivement, une première fonction de transfert de boucle de vitesse définissant une commande du type proportionnelle plus intégrale, et une seconde fonction de transfert de boucle de vitesse définissant une commande du type à rétroaction pseudo-dérivée.

**4.** Un procédé selon la revendication 3, caractérisé en outre en ce que des facteurs de gain (KP, KI, KPDF) de la fonction de transfert de boucle de vitesse sélectionnée sont réglés sous l'effet de signaux de réglage (PADJ, KIADJ, PDFADJ), pendant l'exécution de la procédure produisant les signaux d'ordre de courant (ICMD).

**5.** Un procédé selon la revendication 4, caractérisé en outre en ce qu'une valeur d'un moment d'inertie (JA) du moteur et de sa charge associée, qui est utilisée dans la fonction de transfert de boucle de vitesse sélectionnée, est réglée sous l'effet d'un signal de réglage (JADJ) pendant l'exécution de la procédure qui produit les signaux d'ordre de courant (ICMD).

**6.** Un procédé selon la revendication 1, caractérisé en outre en ce que le signal de prévision de commutation (TC) est déterminé en divisant par la vitesse relative du rotor la distance depuis la position relative présente du rotor jusqu'à la position relative du rotor à laquelle la prochaine commutation sera exigée.

**7.** Un procédé selon la revendication 1, caractérisé en outre en ce que des signaux en modulation d'impulsions en largeur (MODCW, MODCCW) sont produits conformément à une fonction de transfert proportionnelle plus intégrale, travaillant sur une différence entre un courant commandé du moteur (ICMD) et un courant mesuré du moteur, la fonction de transfert étant réalisée avec un facteur de gain pouvant être sélectionné et une constante de temps d'intégration pouvant être sélectionnée.

**8.** Un procédé selon la revendication 1, caractérisé en outre en ce que les signaux d'ordre de vitesse sont produits par l'exécution périodique (244 sur la figure 5b) d'une procédure (202) réalisant une commande de position sous la dépendance d'ordres de position (POS CMD).

**9.** Un procédé selon l'une quelconque des revendications précédentes, dans lequel des dispositifs qui fournissent du courant au moteur sont commandés sous la dépendance de signaux de commande d'éléments de commutation (R+, R-, S+, S-, T+, T-) qui sont produits périodiquement (182 sur la figure 8) sous l'effet de signaux de commande de configuration de commutation (SEXT) et de signaux de commande en modulation d'impulsions en largeur (MODCW, MODCCW) qui sont générés à partir de la comparaison entre le courant mesuré du moteur et des signaux d'ordre de courant (ICMD).

**10.** Un appareil pour commander un moteur à courant continu sans collecteur (146), comprenant un ensemble d'enroulements de champ fixés à un stator du moteur, et un rotor pouvant tourner par rapport au stator, l'appareil ayant pour action de commuter le courant du moteur d'une configuration de conduction dans les enroulements de champ du moteur à une autre, l'appareil comprenant des moyens de traitement de signal (80) pour (i) produire périodiquement des ordres de vitesse (VCMD) définissant une vitesse relative désirée du rotor du moteur; (ii) mesurer périodiquement la position angulaire relative du rotor du moteur par rapport au stator du moteur par l'utilisation d'un transducteur de position; (iii) produire périodiquement des signaux d'ordre de courant (ICMD), définissant un courant désiré du moteur, sous l'effet des signaux d'ordre de vitesse (VCMD) et de la position mesurée du rotor (ACT POS); et (iv) produire des signaux de commande de configuration de commutation (SEXT) définissant une configuration de conduction du courant du moteur dans les enroulements de champ du moteur, sous l'effet de la position angulaire relative du rotor du moteur (ACT POS); caractérisé en ce que le transducteur de position mesure la position angulaire du rotor à un rythme de fermeture de boucle définissant un intervalle de temps prédéterminé (dt); les signaux d'ordre de courant (ICMD) sont produits au rythme de fermeture de boucle; les signaux de commande de configuration de commutation (SEXT) sont produits périodiquement au rythme de fermeture de boucle, et ils comprennent un signal de prévision de commutation (TC), représentant l'instant pendant l'intervalle prédéterminé (dt) auquel un changement d'une configuration à une autre doit avoir lieu; et les moyens de traitement de signal (70) comprennent des moyens logiques (160, 162) pour produire périodiquement des signaux de commande (R+, R-, S+, S-, T+, T-) pour commander l'application du courant au moteur sous l'effet des signaux de commande de configuration de commutation (SEXT$_I$) et de signaux de commande en modulation d'impulsions en largeur (MODCW, MODCCW) qui sont générés à partir de la comparaison du courant mesuré du moteur et des signaux d'ordre de courant (ICMD).

**11.** Appareil selon la revendication 10, caractérisé en outre en ce que les moyens de traitement de signal (80) produisent des signaux d'ordre de courant (ICMD) par l'exécution de procédures de boucle de vitesse (204) réalisant une commande de vitesse conformément à une fonction de transfert de boucle de vitesse.

**12.** Appareil selon la revendication 10, caractérisé en outre en ce que les moyens de traitement de signal (80) produisent des ordres de vitesse (VCMD) par l'exécution périodique de procédures de boucle de position (202) réalisant une commande de position sous la dépendance d'ordres de position (POS CMD).

**13.** Appareil selon la revendication 12, caractérisé en outre en ce qu'un seul transducteur de position (138) est utilisé pour déterminer la position relative du rotor (ACT POS), et la commande de position et la commande de vitesse sont effectuées sous l'effet des valeurs de position mesurée et de vitesse mesurée qui sont obtenues à partir du transducteur de position.

**14.** Appareil selon la revendication 10, caractérisé en outre en ce que les signaux de commande en modulation d'impulsions en largeur (MODCW, MODCCW) sont produits par des moyens (164) comprenant un amplificateur d'erreur de courant (408) qui procure une caractéristique de transfert proportionnelle plus intégrale, et des moyens (438, 440, 442, 432, 434, 436) sont incorporés pour sélectionner un facteur de gain proportionnel pour l'amplificateur d'erreur de courant, tandis que des moyens (412, 414, 416, 418, 422, 424, 426, 428) sont incorporés pour sélectionner une constante de temps d'intégration pour l'amplificateur d'erreur de courant.

# FIG. 1

```
┌ ─ ─ ─ ─ ─ ─ ┐   ┌ ─ ─ ─ ─ ─ ─ ─ ─ ─ ─ ┐   ┌ ─ ─ ─ ─ ─ ─ ─ ─ ─ ─ ┐
│ ┌──────────┐ │   │ ┌──────────────────┐ │   │ ┌──────────────────┐ │        ┌──────────────────┐
│ │ NC SYS   │ │   │ │ SYS INTF &       │ │   │ │ PWR BLK INTF & ANA│ │   △PWR  │     MOTORS        │
│ │PROCESSORS│ │   │ │DIGITAL PROCESSORS│ │   │ │LOOP PROCESSORS   │ │   △ BLK  │ POS TRANSDUCERS   │
│ └──────────┘ │   │ └──────────────────┘ │   │ └──────────────────┘ │        └──────────────────┘
└ ─ ─ ─ ─ ─ ─ ┘   └ ─ ─ ─ ─ ─ ─ ─ ─ ─ ─ ┘   └ ─ ─ ─ ─ ─ ─ ─ ─ ─ ─ ┘
```

NC SYS PROCESSORS — 18

SYS INTF & DIGITAL PROCESSORS — 20

PWR BLK INTF & ANA LOOP PROCESSORS — 22

PWR BLK — 16

MOTORS / POS TRANSDUCERS — 14

10   26   12   24

EP 0 470 556 B1

# FIG. 2

DISP 30

KBO 32

OPERATOR STATION CONTROLLER 34

TAPE 36

PROG STORE MGMNT & EDIT 42

DSK 40

DATA COMM INTF 38

ACTIVE RS-274 PROG BUFF 44

ALT RS-274 PROG BUFF 46

CYCLE CONTROL (PROGRAMMABLE CONTROLLER) 50

RS-274 BLK PROC 56

M.S.T. DATA 58

SPAN DATA 60

G CODE EXPANDER 62

COMM DATA 64

n POS

n AXIS

AUX SPAN GENERATOR 68

POS CMD ADD 70

PATH GENERATION PROC 66

MACH PB(S) LT(S) LSW(S) MECH(S) 52

MACH I/O 54

INT DRIVE SYSTEM 12

PWR BLK 16

Z POS

Z AXIS

Y POS

Y AXIS

X POS

X AXIS

EP 0 470 556 B1

# FIG. 3

EP 0 470 556 B1

# FIG. 3 cont.

# FIG.4

EP 0 470 556 B1

# FIG. 4 cont.

EP 0 470 556 B1

# FIG. 5a

PROC I BKGRND

230

DO HARDWARE
MONITOR
ROUTINES

232

DO MODE
CONTROL
ROUTINES

# FIG. 5b

```
    ┌──────────────┐
    │   PROC I     │
    │  INTERRUPT   │
    │  PROCEDURE   │
    └──────┬───────┘
           │              234
    ┌──────▼───────┐
    │ RD RESOLVERS │
    └──────┬───────┘
           │              236
    ┌──────▼───────┐
    │  CALC AXIS   │
    │  POSITION    │
    └──────┬───────┘
           │              238
          ╱ ╲
        ╱ KV  ╲  NO
      ╱  ADJ    ╲──────────┐
      ╲ CMPLT   ╱          │
        ╲  ?  ╱            │
          ╲ ╱              │
           │ YES           │
           │         242   │
    ┌──────▼───────┐       │
    │ LD           │       │
    │ KVEFF(I)     │       │
    └──────┬───────┘       │
           │◄──────────────┘
    ┌──────▼───────┐  244
    │ CALC         │       FE = POS CMD - ACT POS
    │ VELOCITY CMD │       VCMD = FE * KV
    └──────┬───────┘
           │         246
          ╱ ╲    YES
        ╱FAULT╲──────────┐
        ╲  ?  ╱          │        248
          ╲ ╱            │  ┌──────▼───────┐
           │ NO          │  │ SET          │
           │             │  │ VCMD(I) = O  │
           │             │  └──────┬───────┘
           │◄─────────────────────┘
    ┌──────▼───────┐  250
    │ DO VELOCITY  │
    │ LOOP COMP    │
    └──────┬───────┘
           │
          ╱▼╲
         │5-A│
          ╲ ╱
```

# FIG. 5b cont.

```
        ┌───┐
        │5-A│
        └─┬─┘
          │
          ▼                    ┌─252
  ┌───────────────────────┐
  │ WRITE                 │
  │ ICMD(I), ACT VEL(I),  │
  │ ACT POS(I), RES(I)    │
  │ (SIN(I) & COS(I))     │
  └───────────┬───────────┘
              │
              ▼              ┌─254
           ╱ MTR ╲
          ╱  RES  ╲  YES           ┌─256
         ╱  DISC   ╲─────┐    ┌──────────┐
         ╲    ?    ╱     │    │ SET      │
          ╲       ╱      └───▶│ ICMD(F) =│
           ╲     ╱            │ MAX      │
             │ NO             └────┬─────┘
             │                     │
             ◀─────────────────────┘
             │
             ▼              ┌─258
      ┌────────────┐
      │ │DO        │ │
      │ │COMMUT    │ │
      │ │COMP      │ │
      └──────┬─────┘
             │            ┌─260
      ┌────────────┐
      │ WRITE      │
      │ ICMD(I),   │
      │ SEXT(I)    │
      └──────┬─────┘
             │         ┌─262
             ▼
        ╭─────────╮
        │ RETURN  │
        ╰─────────╯
```

# FIG.6a

PROC 2
BKGRND

DO MODE
CONTROL
ROUTINES  280

CALC
KVEFF(I)  282

SIN+COS<LIM

284
RES
OUTPUT
OK
?  —YES→  SET
ERROR
STAT  286

NO

DO
VELOCITY
LOOP GAIN
ADJUST  288

SERVO MON
POS SERVO

290
FE
CHECKS
REQUIRED
?  —NO→

YES

292
EXCESS
FE
?  —YES→  SET XS
ERROR
STAT  294

NO

296
SERVO
LIM
?  —YES→  SET
SERVO FL
STAT  298

NO

# FIG.6b

PROC 2
INTERRUPT
PROCEDURE

LD
POS CMD(I)  300

302
ERROR
STATUS
SET
?  —YES→  SET
VEXT(I)=0  304

NO

LD
KP(I),
KI(I)  306

LD
CMC MODE
CMDS, AXIS
ENABLE STATUS  308

DO
SUB-SPAN
INTERP  310

CALC
TCMD CONV  312

CALC
AVG VEL
VAVG(I)  314

RETURN  316

# FIG.8

EVENT
SEQUENCE

WRITE
SEXT(I) to
LCA(s)  182

WRITE
ICMD(I) to
ANA LOOP
PROC(s)  184

SAMPLE
RESOLVER
OUTPUTS  186

DO
FOR I=
0 to N  188

CONVERT
RES(I)
OUTPUTS

WRITE
RES(I) to
DUAL PORT

# FIG. 7

EP 0 470 556 B1

FIG. 9